# EUROPEAN PATENT APPLICATION

(11) **EP 4 578 708 A1**
(43) Date of publication of application: **02.07.2025**
(21) Application number: 24221648.9
(22) Date of filing: 19.12.2024
(51) Int. Cl.: B60L 15/20

(54) **BATTERY ELECTRIC VEHICLE AND STORAGE MEDIUM**

(30) Priority: 27.12.2023 JP 2023221047
(71) Applicant: TOYOTA JIDOSHA KABUSHIKI KAISHA, Aichi-ken, 471-8571 (JP)
(72) Inventor: ISAMI, Yoichiro, TOYOTA-SHI, AICHI-KEN, 471-8571 (JP); YUASA, Ryohei, TOYOTA-SHI, AICHI-KEN, 471-8571 (JP); UCHIDA, Takahiro, TOYOTA-SHI, AICHI-KEN, 471-8571 (JP)
(74) Representative: Cabinet Beau de Loménie

(57) **Abstract**

A battery electric vehicle (100) includes an electric motor (4F, 4R). The battery electric vehicle (100) includes: an accelerator pedal (22); a pseudo sequential shifter (25); and a processor (102). The pseudo sequential shifter (25) is installed on a steering (24), and simulates a sequential shifter that is used to perform a shifting operation of a manual transmission internal combustion engine vehicle. The processor (102) executes, according to selection by a driver, a control mode in which an operation of the pseudo sequential shifter (25) is associated with a virtual shift position that is a virtually implemented shift position, and an operation amount of the accelerator pedal (22), the virtual shift position, and a vehicle speed are associated with torque of the electric motor (4F, 4R). The processor (102) automatically shifts down the virtual shift position according to the vehicle speed when a steering angle of a steering wheel (41) becomes equal to or greater than a predetermined angle during execution of the control mode.

## Description

### BACKGROUND OF THE INVENTION

### 1. Field of the Invention

The present disclosure relates to battery electric vehicles including an electric motor as a driving source and storage media.

### 2. Description of Related Art

Japanese Unexamined Patent Application Publication No. 2021-151168 (JP 2021-151168 A) discloses a technique related to a battery electric vehicle that can simulate manual shifting operations of a vehicle equipped with a manual transmission and powered by an internal combustion engine (hereinafter referred to as "manual transmission internal combustion engine vehicle") by controlling an electric motor. A driver of this battery electric vehicle can select from a plurality of virtual gear stage modes (virtual shift positions) using a paddle switch etc. The paddle switch is a shift device that simulates a sequential shifter installed on a steering (hereinafter referred to as "pseudo sequential shifter").

### SUMMARY OF THE INVENTION

The above technique allows a driver to experience shifting operations of a manual transmission internal combustion engine vehicle while driving a battery electric vehicle. At this time, the driver can use the pseudo sequential shifter to select a virtual shift position that replicates a shift position of a manual transmission internal combustion engine vehicle. However, in the case where the pseudo sequential shifter is installed on a steering, the positional relationship between the driver's hands placed on the steering wheel and the pseudo sequential shifter changes when the steering is steered to a large extent to turn the battery electric vehicle. Therefore, it is difficult for the driver to smoothly operate the pseudo sequential shifter when the steering angle of the steering becomes large.

The present disclosure provides a battery electric vehicle that can replicate shifting operations of a manual transmission internal combustion engine vehicle, that allows a driver to select a mode in which he or she can experience operating a manual transmission internal combustion engine vehicle, and that can improve ease of driving in that mode.

According to one aspect of the present disclosure, a battery electric vehicle includes an electric motor as a driving source. The battery electric vehicle includes: an accelerator pedal that is used to drive the battery electric vehicle; a pseudo sequential shifter; and a processor that controls the battery electric vehicle according to an operation of the accelerator pedal. The pseudo sequential shifter is installed on a steering, and simulates a sequential shifter that is used to perform a shifting operation of a manual transmission internal combustion engine vehicle. The processor is configured to execute, according to selection by a driver, a control mode in which an operation of the pseudo sequential shifter is associated with a virtual shift position that is a virtually implemented shift position, and an operation amount of the accelerator pedal, the virtual shift position, and a vehicle speed of the battery electric vehicle are associated with torque of the electric motor. The processor is configured to automatically shift down the virtual shift position according to the vehicle speed when a steering angle of a steering wheel becomes equal to or greater than a predetermined angle during execution of the control mode.

According to the one aspect of the present disclosure, the pseudo sequential shifter may be installed on the steering wheel. Alternatively, the pseudo sequential shifter may be mounted on a steering column.

According to another aspect of the present disclosure, a non-transitory storage medium stores instructions that are executable by one or more processors of a battery electric vehicle and that cause the one or more processors to perform functions. The battery electric vehicle includes an electric motor as a driving source, and includes: an accelerator pedal that is used to drive the battery electric vehicle; a pseudo sequential shifter; and the one or more processors that control the battery electric vehicle according to an operation of the accelerator pedal. The pseudo sequential shifter is installed on a steering, and simulates a sequential shifter that is used to perform a shifting operation of a manual transmission internal combustion engine vehicle. The functions include: executing, according to selection by a driver, a control mode in which an operation of the pseudo sequential shifter is associated with a virtual shift position that is a virtually implemented shift position, and an operation amount of the accelerator pedal, the virtual shift position, and a vehicle speed of the battery electric vehicle are associated with torque of the electric motor; and automatically shifting down the virtual shift position according to the vehicle speed when a steering angle of a steering wheel becomes equal to or greater than a predetermined angle during execution of the control mode.

According to the battery electric vehicle of the present disclosure, the virtual shift position is automatically shifted down according to the vehicle speed of the battery electric vehicle when the steering angle of the steering wheel becomes equal to or greater than the predetermined angle when in the manual mode. In other words, even when the steering angle of the steering wheel becomes large and it becomes difficult for the driver to operate the pseudo sequential shifter, a downshift is automatically performed according to the vehicle speed. This allows the virtual shift position to be shifted down without waiting until the steering angle of the steering wheel becomes small enough for the driver to easily operate the pseudo sequential shifter, and thus allows smooth acceleration when the driver wants to accelerate the battery electric vehicle again. Drivability can thus be improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows the configuration of a battery electric vehicle according to an embodiment of the present disclosure;
FIG. 2 shows an example of a pseudo sequential shifter installed on a steering wheel;
FIG. 3 shows an example of a pseudo sequential shifter installed on a steering column;
FIG. 4 is a tree diagram showing an example of control modes of the battery electric vehicle that are selectable by a control device;
FIG. 5 shows the configuration of the control device related to driving control of the battery electric vehicle;
FIG. 6 shows the configuration of the control device related to sound control of the battery electric vehicle;
FIG. 7 is a conceptual diagram showing an example of a situation in which the battery electric vehicle according to the embodiment performs an automatic upshift;
FIG. 8 is a flowchart showing an example of a process that is performed by the battery electric vehicle according to the embodiment;
FIG. 9 illustrates rotation of the steering wheel when the pseudo sequential shifter is installed on the steering column; and
FIG. 10 is a graph illustrating the timings at which the battery electric vehicle according to the embodiment performs an automatic downshift.

### DETAILED DESCRIPTION OF EMBODIMENTS

Embodiments of the present disclosure will be described below with reference to the accompanying drawings.

### 1. Configuration of Power System of Battery Electric Vehicle

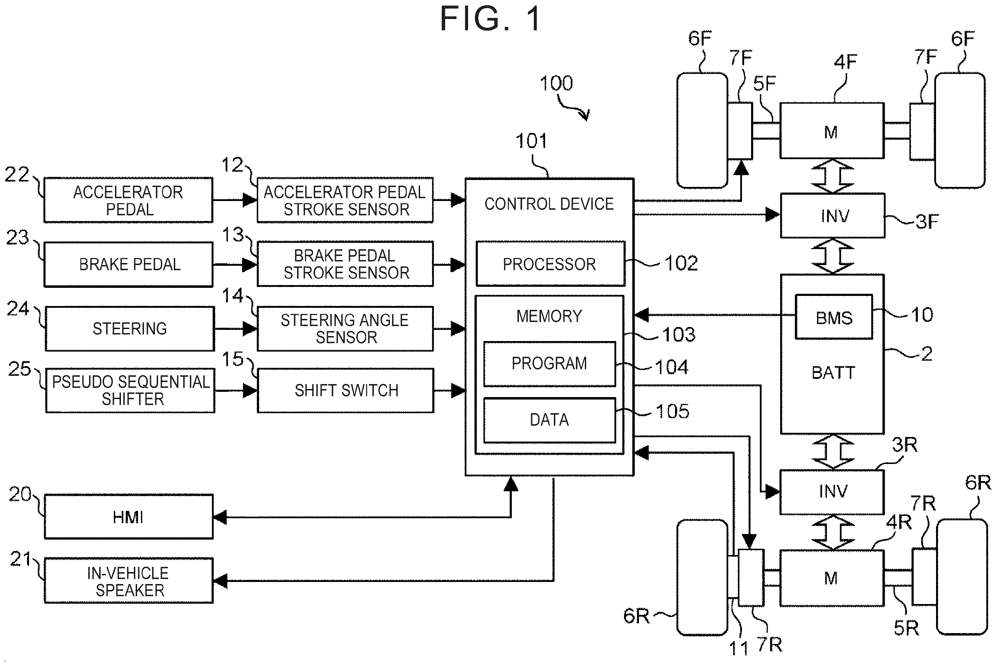

FIG. 1 schematically shows the configuration of a battery electric vehicle 100 according to an embodiment of the present disclosure. First, the configuration of a power system of the battery electric vehicle 100 will be described with reference to FIG. 1.

The battery electric vehicle 100 includes two electric motors (M) 4F, 4R at the front and rear as traction power sources. The electric motors 4F, 4R are, for example, three-phase alternating current (AC) motors. The front electric motor 4F is connected to a front drive shaft 5F that drives front wheels 6F. The rear electric motor 4R is connected to a rear drive shaft 5R that drives rear wheels 6R. The front wheels 6F are suspended on electronically controlled right and left front suspensions 7F that are independent of each other. The rear wheels 6R are suspended on electronically controlled right and left rear suspensions 7R that are independent of each other.

The front electric motor 4F and the rear electric motor 4R are equipped with inverters (INVs) 3F, 3R, respectively. The front inverter 3F and the rear inverter 3R are each connected to a battery (BATT) 2. The battery 2 stores electrical energy for driving the electric motors 4F, 4R. That is, the battery electric vehicle 100 is a battery electric vehicle (BEV) that runs on the electrical energy stored in the battery 2. The inverters 3F, 3R are, for example, voltage inverters, and control the torque of the electric motors 4F, 4R, respectively, by pulse width modulation (PWM) control.

### 2. Configuration of Control System of Battery Electric Vehicle

Next, the configuration of a control system of the battery electric vehicle 100 will be described with reference to FIGS. 1 to 3.

The battery electric vehicle 100 includes a battery management system (BMS) 10. The battery management system 10 is a device that monitors the cell voltage, current, temperature, etc. of the battery 2. The battery management system 10 has a function to estimate the state of charge (SOC) of the battery 2.

The battery electric vehicle 100 includes a vehicle speed sensor 11. At least one of wheel speed sensors, not shown, mounted on the right and left front wheels 6F and the right and left rear wheels 6R is used as the vehicle speed sensor 11. The battery electric vehicle 100 also includes an accelerator pedal stroke sensor 12. The accelerator pedal stroke sensor 12 is provided for an accelerator pedal 22, and outputs a signal indicating the amount of depression of the accelerator pedal 22, i.e., the accelerator operation amount. The battery electric vehicle 100 further includes a brake pedal stroke sensor 13. The brake pedal stroke sensor 13 is provided for a brake pedal 23, and outputs a signal indicating the amount of depression of the brake pedal 23, i.e., the brake operation amount. The battery electric vehicle 100 further includes a steering angle sensor 14. The steering angle sensor 14 is provided for a steering 24, and outputs a signal indicating the steering angle of the steering 24, i.e., the rotation angle of a steering wheel.

The accelerator pedal 22, the brake pedal 23, and the steering 24 are driving operation members that are used to drive the battery electric vehicle 100. In addition to these driving operation members, the battery electric vehicle 100 includes a pseudo shifting operation member imitating an operation member that is used to perform shifting operations of a manual transmission internal combustion engine vehicle. The pseudo shifting operation member includes at least a pseudo sequential shifter 25 described below.

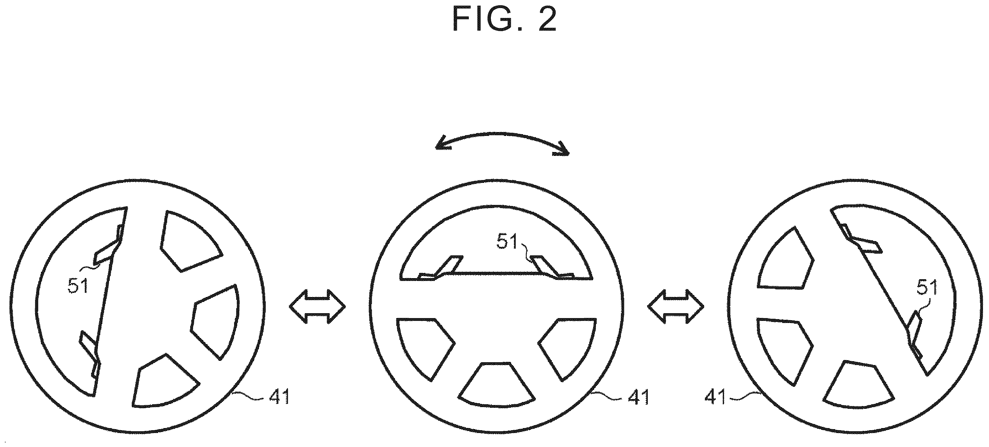

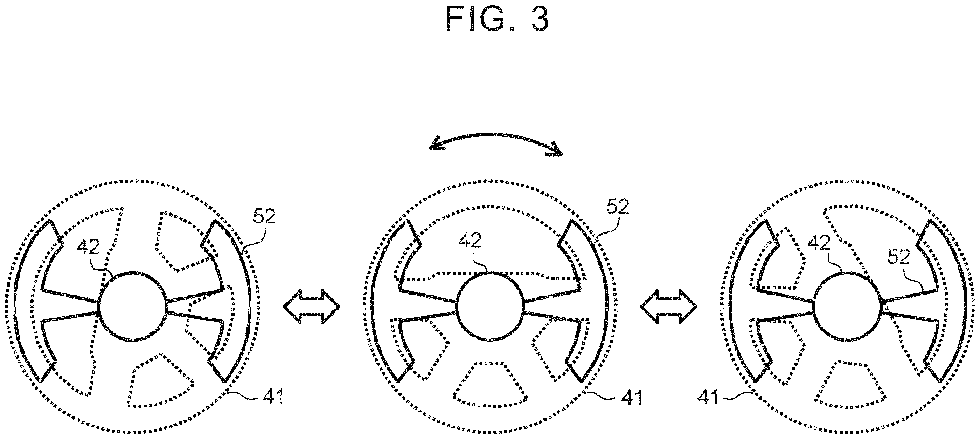

In the present embodiment, the pseudo sequential shifter 25 is provided for the steering 24. FIGS. 2 and 3 show examples of the pseudo sequential shifter 25.

FIG. 2 shows a pseudo paddle shifter 51 installed on a steering wheel 41 as an example of the pseudo sequential shifter 25. The pseudo paddle shifter 51 is a dummy different from a real steering wheel-integrated paddle shifter that is a type of sequential shifter. The pseudo paddle shifter 51 is composed of a pair of paddles having a structure imitating shift paddles that are attached to a steering wheel. The right and left paddles can be moved independently of each other. The pseudo paddle shifter 51 is fixed to the steering wheel 41. Therefore, when the steering wheel 41 is rotated, the pseudo paddle shifter 51 is also rotated with the steering wheel 41.

The pseudo paddle shifter 51 is provided with a shift switch 15 (see FIG. 1). The shift switch 15 outputs an upshift signal when the right paddle is pulled, and outputs a downshift signal when the left paddle is pulled. Alternatively, the left paddle may correspond to an upshift signal, and the right paddle may correspond to a downshift signal. Since the battery electric vehicle 100 does not have an actual transmission, the shift position that is shifted up or down by the signal from the shift switch 15 is a virtual shift position.

FIG. 3 shows a pseudo paddle shifter 52 installed on a steering column (steering shaft) 42 as another example of the pseudo sequential shifter 25. The pseudo paddle shifter 52 is a dummy different from a real steering column-integrated paddle shifter. The pseudo paddle shifter 52 is composed of a pair of paddles having a structure imitating shift paddles that are attached to a steering column. The right and left paddles can be moved independently of each other. The pseudo paddle shifter 52 is fixed to the steering column 42. Therefore, the position of the pseudo paddle shifter 52 does not change even when the steering wheel 41 is rotated.

The pseudo paddle shifter 52 is provided with the shift switch 15 (see FIG. 1). The shift switch 15 outputs an upshift signal when the right paddle is pulled, and outputs a downshift signal when the left paddle is pulled. Alternatively, the left paddle may correspond to an upshift signal, and the right paddle may correspond to a downshift signal.

As still another example, the pseudo sequential shifter 25 may be a button mounted on the steering wheel 41. For example, two buttons are mounted, one on the right side of the steering wheel 41 and the other on the left side of the steering wheel 41. The shift switch 15 outputs an upshift signal when the right button is depressed, and outputs a downshift signal when the left button is depressed.

Referring back to FIG. 1, the battery electric vehicle 100 further includes a human-machine interface (HMI) 20 as an interface with a driver, and an in-vehicle speaker 21. The HMI 20 includes a touch panel display. The HMI 20 displays information on the touch panel display, and receives inputs from the driver through touch operations on the touch panel display. The in-vehicle speaker 21 can provide information to the driver by voice, and can also output a pseudo engine sound that will be described later.

The battery electric vehicle 100 includes a control device 101. Sensors and devices to be controlled that are mounted on the battery electric vehicle 100 are connected to the control device 101 via an in-vehicle network. In addition to the battery management system 10, the vehicle speed sensor 11, the accelerator pedal stroke sensor 12, the brake pedal stroke sensor 13, the steering angle sensor 14, and the shift switch 15, various other sensors are mounted on the battery electric vehicle 100.

The control device 101 is typically an electronic control unit (ECU). The control device 101 may be a combination of a plurality of ECUs. The control device 101 includes at least a processor 102 and a memory 103. The memory 103 includes a random access memory (RAM) for temporarily recording data and a read-only memory (ROM) for storing a program 104 that is executable by the processor 102 and various types of data 105 related to the program. The program 104 is composed of a plurality of instructions. The processor 102 reads the program 104 and the data 105 from the memory 103, executes the program 104, and generates control signals based on signals acquired from the sensors. The control device 101 may include one processor 102, or may include a plurality of processors 102.

The control device 101 controls the battery electric vehicle 100 in a plurality of control modes including at least an automatic mode and a manual mode. The driver can select a control mode himself or herself by performing a touch operation on the touch panel display of the HMI 20. Specifically, when a touch operation is performed on the touch panel display of the HMI 20, one or more programs 104 associated with that touch operation are read from the memory 103 and executed by the processor 102. The control modes of the battery electric vehicle 100 that are executed by the control device 101 and that are selectable by the driver through an operation on the HMI 20, and driving control and sound control of the battery electric vehicle 100 related to the control modes will be described below.

### 3. Control Modes of Battery Electric Vehicle

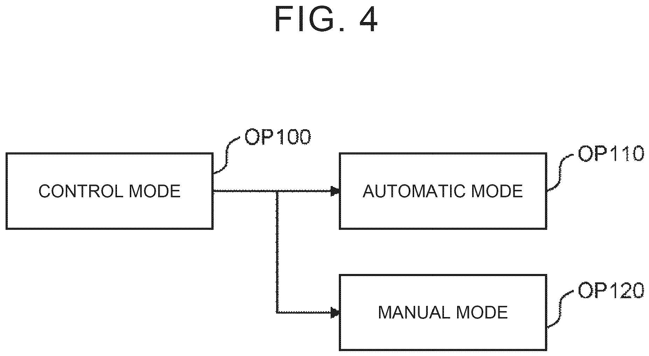

FIG. 4 is a tree diagram showing an example of the control modes of the battery electric vehicle 100 that are selectable by the control device 101. A selection screen is displayed on the touch panel display of the HMI 20 according to the control tree shown in FIG. 4.

An option "control mode" OP100 is displayed on the initial screen of the HMI 20. When the option "control mode" OP100 is selected, options "automatic mode" OP110 and "manual mode" OP120 are displayed on the touch panel display. When the option "automatic mode" OP110 is selected, the control mode of the battery electric vehicle 100 is switched to the automatic mode. The automatic mode is a control mode in which the battery electric vehicle 100 is driven as a normal BEV. In the automatic mode, the driver can basically drive the battery electric vehicle 100 only by operating the accelerator pedal 22, the brake pedal 23, and the steering wheel 41. In the automatic mode, shift operations of the pseudo sequential shifter 25 are disabled.

When the option "manual mode" OP120 is selected, the control mode of the battery electric vehicle 100 is switched to the manual mode. The manual mode is a control mode in which the battery electric vehicle 100 is operated like a manual transmission internal combustion engine vehicle. In the manual mode, the driver performs shift operations using the pseudo sequential shifter 25. The operation when the gear ratio of a manual transmission is changed is replicated by a shift operation of the pseudo sequential shifter 25. Clutch operations in a real sequential-shift manual transmission are automatically performed by a robot. Therefore, even when the battery electric vehicle 100 is in the manual mode, the clutch operation amount is automatically calculated. Since the battery electric vehicle 100 does not have an actual clutch, the clutch operation amount calculated in the manual mode is a virtual clutch operation amount.

The manual mode may include a plurality of control modes. The control modes that are selectable by the driver may include, for example, control modes related to drive modes such as four-wheel drive and rear-wheel drive and control modes related to the types of engine sound to be reproduced by the battery electric vehicle 100.

### 4. Driving Control of Battery Electric Vehicle

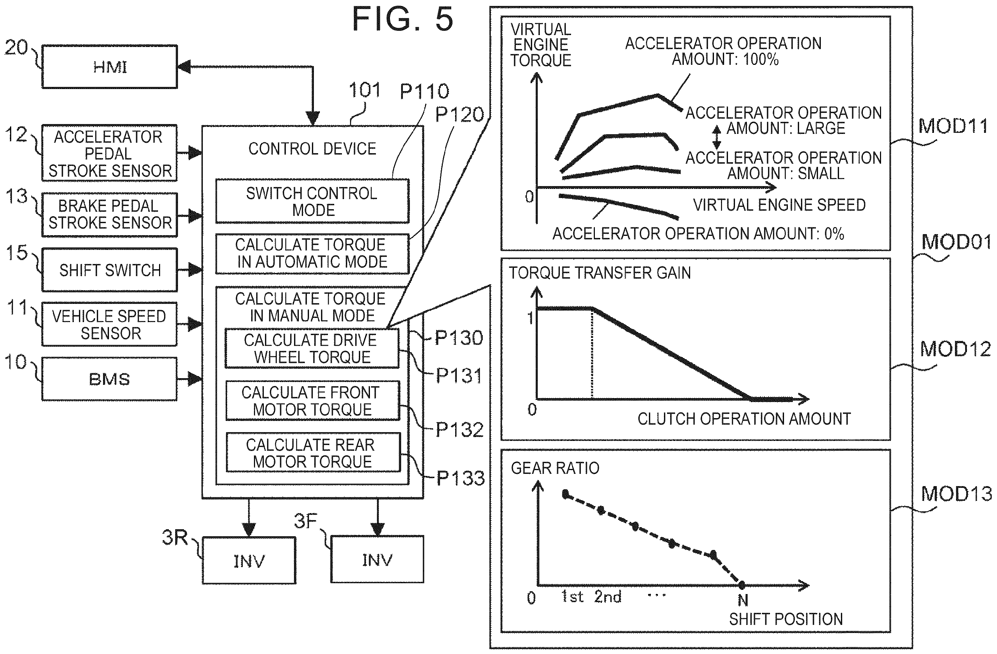

FIG. 5 shows the configuration of the control device 101 related to the driving control of the battery electric vehicle 100. Specifically, FIG. 5 shows a configuration related particularly to torque control out of the driving control. The processor 102 functions as a driving control device when the processor 102 executes one or more driving control programs 104 stored in the memory 103.

A control mode signal is input from the HMI 20 to the control device 101 that functions as a driving control device. The control mode signal includes information on the control mode selected by the driver. The control device 101 performs a process P110 based on the control mode signal. In the process P110, the control mode is switched according to the control mode signal. Switching of the control mode that particularly affects the driving control is switching between the automatic mode and the manual mode.

When the control mode is switched to the automatic mode, the control device 101 performs a process P120 of calculating torque in the automatic mode. In the process P120, the control device 101 acquires a vehicle speed from a signal from the vehicle speed sensor 11, and acquires an accelerator operation amount from a signal from the accelerator pedal stroke sensor 12. The control device 101 has a motor torque map that uses an accelerator operation amount and a vehicle speed as parameters. The control device 101 inputs the acquired vehicle speed and accelerator operation amount to the motor torque map, and controls the inverters 3F, 3R so as to cause the electric motors 4F, 4R to generate the torque obtained from the motor torque map.

When the control mode is switched to the manual mode, the control device 101 performs a process P130 of calculating torque in the manual mode. The process P130 includes a process P131 of calculating torque to be generated by drive wheels. The process P130 also includes a process P132 and a process P133. The process P132 is a process of calculating torque to be generated by the front electric motor 4F, and the process P133 is a process of calculating torque to be generated by the rear electric motor 4R. The processes P132, P133 are performed according to the drive wheel torque calculated in the process P131 and the torque distribution between the front wheels 6F and the rear wheels 6R.

A vehicle model MOD01 is used to calculate the drive wheel torque in the process P131. The vehicle model MOD01 includes an engine model MOD11, a clutch model MOD12, and a transmission model MOD13. An engine virtually implemented by the vehicle model MOD01 will be referred to as "virtual engine." A clutch virtually implemented by the vehicle model MOD01 will be referred to as "virtual clutch." A transmission virtually implemented by the vehicle model MOD01 will be referred to as "virtual transmission." The engine model MOD11 models the virtual engine. The clutch model MOD12 models the virtual clutch. The transmission model MOD13 models the virtual transmission.

The engine model MOD11 calculates a virtual engine speed and virtual engine torque. The virtual engine speed is calculated from the vehicle speed, the overall reduction ratio, and the slip ratio of the virtual clutch. The virtual engine torque is calculated from the virtual engine speed and the accelerator operation amount. The vehicle speed is acquired from a signal from the vehicle speed sensor 11. The accelerator operation amount is acquired from a signal from the accelerator pedal stroke sensor 12. The overall reduction ratio is a numerical value obtained by multiplying the gear ratio of the virtual transmission by the reduction ratio determined by the mechanical structure from the virtual transmission to the drive wheels. The engine model MOD11 defines the relationship between the virtual engine speed and the virtual engine torque for each accelerator operation amount. Engine characteristics of the engine model MOD11 may be selectable by the driver through an operation on the HMI 20. For example, the engine characteristics may be selectable from a low to medium rotation type, a high rotation type, and a full range type.

The clutch model MOD12 calculates a torque transfer gain. The torque transfer gain is a gain for calculating the degree of torque transfer of the virtual clutch. The clutch model MOD12 gives the torque transfer gain with respect to the clutch operation amount. The clutch operation amount is calculated using a clutch operation model. The clutch operation model is a model that simulates clutch operations by a model driver. The vehicle speed, the virtual engine speed, and a signal from the shift switch 15 are input to the clutch operation model.

The signal from the shift switch 15 is used to determine when to perform a clutch operation. When a shift operation by the driver is detected based on the signal from the shift switch 15, the clutch operation model maximizes the clutch opening amount to disengage the virtual clutch. The vehicle speed and the virtual engine speed are used to calculate the clutch operation amount. The clutch operation model calculates the clutch operation amount based on the difference between the rotational speed of an input shaft of the virtual transmission calculated from the vehicle speed and the virtual engine speed, so as to smoothly match the rotational speed of the input shaft of the virtual transmission with the virtual engine speed.

The torque transfer gain calculated in the clutch model MOD12 is converted to the clutch torque capacity of the virtual clutch, i.e., the virtual clutch torque capacity. Virtual clutch torque that is input from the virtual clutch to the virtual transmission is calculated based on a comparison between the virtual clutch torque capacity and the virtual engine torque calculated by the engine model MOD11. The clutch model MOD12 calculates the slip ratio by subtracting the torque transfer gain from 1. The slip ratio is used to calculate the virtual engine speed in the engine model MOD11.

The transmission model MOD13 calculates a virtual gear ratio. The virtual gear ratio is a gear ratio determined by the virtual shift position of the virtual transmission. The virtual gear ratio is set for each virtual shift position. The highest virtual gear ratio is set for first gear, followed by second gear, third gear, fourth gear, ... in descending order. The virtual shift position is shifted up by one gear in response to an upshift signal from the shift switch 15, and is shifted down by one gear in response to a downshift signal from the shift switch 15. There are no physical restrictions on the number of shift positions that are determined by the pseudo sequential shifter 25. Therefore, for example, the driver may be able to set the number of shift positions as desired through the HMI 20.

The transmission model MOD13 calculates virtual transmission torque using the virtual gear ratio and the virtual clutch torque. The virtual transmission torque is virtual torque that is output from the virtual transmission. The control device 101 controls the inverters 3F, 3R so as to change the output torques of the electric motors 4F, 4R according to the virtual transmission torque. The virtual transmission torque changes discontinuously in response to switching of the virtual gear ratio. Such a discontinuous change in virtual transmission torque causes torque shock in the battery electric vehicle 100, creating a feel of a vehicle equipped with a stepped transmission.

The vehicle model MOD01 calculates the drive wheel torque from the virtual transmission torque and the reduction ratio. The torque distribution between the front wheels 6F and the rear wheels 6R can be fixed or made variable by controlling the electric motors 4F, 4R using the inverters 3F, 3R. When the four-wheel drive mode is selected as the drive mode, the drive wheel torque is the sum of torques applied to the right and left front wheels 6F and the right and left rear wheels 6R. The torque distribution between the front wheels 6F and the rear wheels 6R may be fixed, or may be actively or passively varied. When the rear-wheel drive mode is selected as the drive mode, the drive wheel torque is the sum of torques applied to the right and left rear wheels 6R.

In the process P132, the torque of the front electric motor 4F (front motor torque) in the manual mode is calculated by multiplying the drive wheel torque calculated in the process P131 by the torque distribution ratio of the front wheels 6F and the reduction ratio from an output shaft of the front electric motor 4F to the front wheels 6F. The control device 101 controls the front inverter 3F so as to cause the front electric motor 4F to generate the front motor torque calculated in the process P132.

In the process P133, the torque of the rear electric motor 4R (rear motor torque) in the manual mode is calculated by multiplying the drive wheel torque calculated in the process P131 by the torque distribution ratio of the rear wheels 6R and the reduction ratio from an output shaft of the rear electric motor 4R to the rear wheels 6R. The control device 101 controls the rear inverter 3R so as to cause the rear electric motor 4R to generate the rear motor torque calculated in the process P133.

In the configuration shown in FIG. 5, the battery management system 10 and the brake pedal stroke sensor 13 are not necessarily required for the driving control described above. However, when switching of the control mode affects the SOC of the battery 2, a signal from the battery management system 10 may be used as information for determining whether to allow switching of the control mode. In the case where the method of operating the battery electric vehicle 100 changes significantly such as when the control mode is switched between the automatic mode and the manual mode, the condition for switching the control mode may be that the brake pedal 23 is being depressed. In that case, a signal from the brake pedal stroke sensor 13 can be used as information for determining whether the brake pedal 23 is being depressed.

### 5. Sound Control of Battery Electric Vehicle

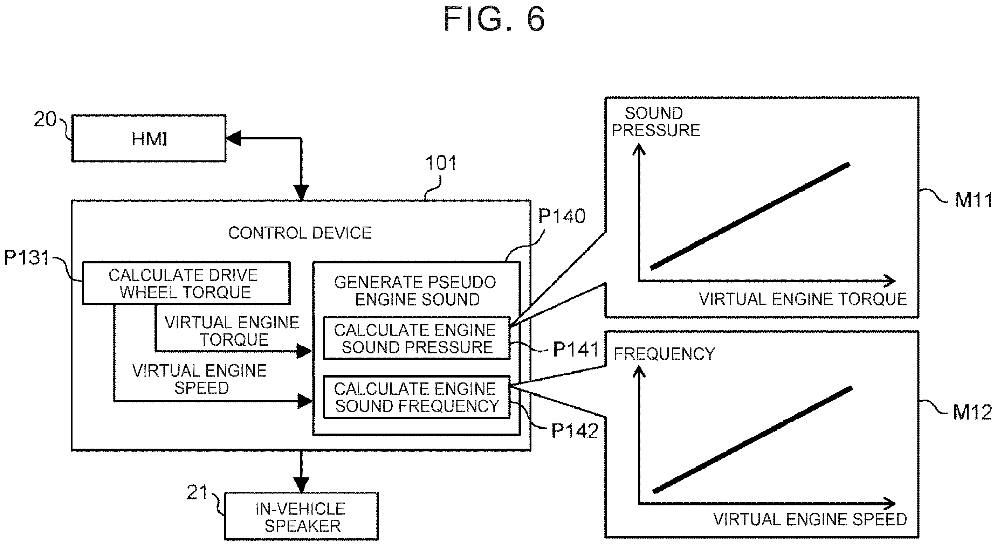

FIG. 6 shows the configuration of the control device 101 related to the sound control of the battery electric vehicle 100. The processor 102 functions as a sound control device when the processor 102 executes one or more sound control programs 104 stored in the memory 103. The processor 102 functioning as a driving control device and the processor 102 functioning as a sound control device may be separate processors, or may be the same processor.

The control device 101 functioning as a sound control device can output artificially generated sounds from the in-vehicle speaker 21. One of such artificial sounds is a pseudo engine sound that imitates an engine sound of a conventional internal combustion engine vehicle. When a control mode signal indicating that the manual mode has been selected is received from the HMI 20, the control device 101 functioning as a sound control device performs a process P140. In the process P140, a pseudo engine sound is generated based on the virtual engine torque and virtual engine speed calculated in the process P131.

In the process P140, a predetermined engine sound is used as a sound source of the pseudo engine sound to be generated from the in-vehicle speaker 21. For example, the type of engine sound may be selectable by the driver via the HMI 20. In the process P140, however, the sound from the sound source is not used as it is. In the process P140, the sound pressure of the sound source is changed by, for example, an amplifier, and the frequency of the sound source is changed by, for example, a frequency modulator.

The process P140 includes a process P141 of calculating an engine sound pressure and a process P142 of calculating an engine sound frequency. In the process P141, the sound pressure of the pseudo engine sound is calculated from the virtual engine torque using a sound pressure map M11. The sound pressure map M11 is created so that the sound pressure increases as the virtual engine torque increases. In the process P142, the frequency of the pseudo engine sound is calculated from the virtual engine speed using a frequency map M12. The frequency map M12 is created so that the frequency increases as the virtual engine speed increases. The virtual engine torque and the virtual engine speed change according to the driver's accelerator operation, shift operation, and clutch operation. Changing the sound pressure and frequency of the pseudo engine sound according to the virtual engine torque and virtual engine speed that change in this manner can give the driver a feel as if he or she were actually driving a real manual transmission internal combustion engine vehicle.

### 6. First embodiment: Pseudo Sequential Shifter Installed on Steering Wheel

### 6-1. Automatic Downshift During Turning

As described above, when the driver of the battery electric vehicle 100 operates the HMI 20 to switch the control mode to the manual mode, the driver can experience operating a manual transmission internal combustion engine vehicle while driving the battery electric vehicle 100. Although the driver can have enough fun simply by experiencing an operating feel of a manual transmission internal combustion engine vehicle, ways to further improve convenience while allowing the driver to experience operating a manual transmission internal combustion engine vehicle will be considered.

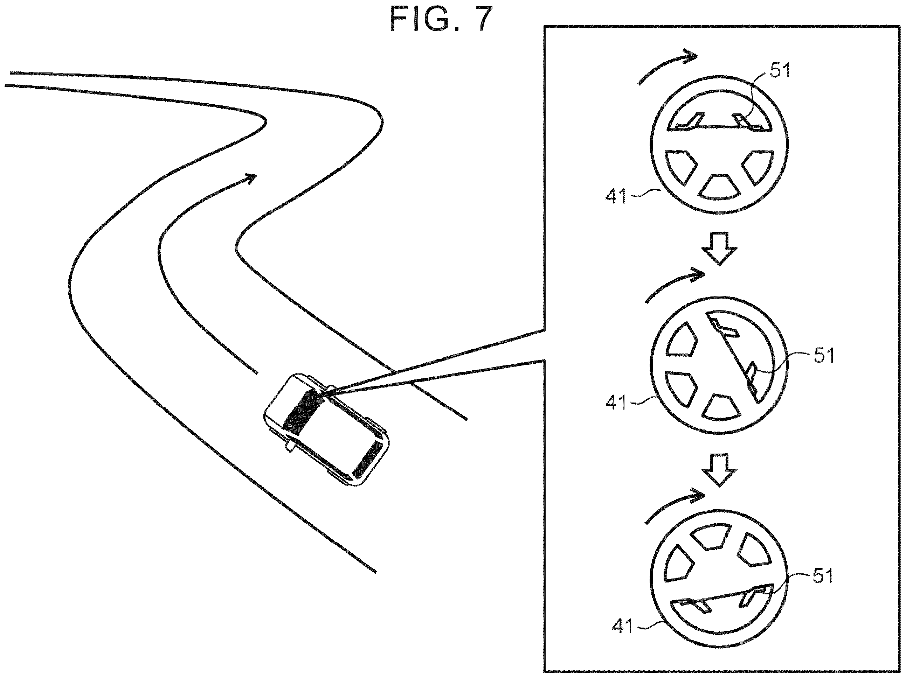

One of the situations where the driver may feel inconvenienced is when the battery electric vehicle 100 is traveling on a winding road such as a mountain road, as shown in FIG. 7. A first embodiment considers a case where the pseudo sequential shifter 25 is the pseudo paddle shifter 51 installed on the steering wheel 41.

It is herein assumed that the battery electric vehicle 100 enters a curved road while maintaining a high vehicle speed at which the battery electric vehicle 100 was traveling in the straight section before the curve. At the time the vehicle enters the curved road, the virtual shift position is a higher shift position, such as fifth or sixth gear, according to the vehicle speed. It is assumed that the driver slows down the battery electric vehicle 100 after it has entered the curved road. As the vehicle speed decreases, the virtual engine speed also decreases accordingly.

Considering that the driver accelerates the battery electric vehicle 100 again on a straight road after the curve, it is desirable for the driver to shift down the virtual shift position in advance according to the virtual engine speed. A driver of a manual transmission internal combustion engine vehicle would normally use the volume of the engine sound etc. as a guide to determine how much the engine speed has dropped, and when the engine speed has dropped to a certain extent, would downshift to a shift position that matches the engine speed and the vehicle speed. The driver of the battery electric vehicle 100 that simulates the operation of a manual transmission internal combustion engine vehicle also performs basically the same operation. In other words, as the vehicle speed decreases, the virtual engine speed gradually decreases and the pseudo engine sound becomes quieter. The driver will use the volume of the pseudo engine sound, the vehicle speed, etc. as a guide, and consider shifting down the virtual shift position when the virtual engine speed drops to a certain extent.

At this time, however, the driver is turning the steering wheel 41 to match the curve of the road. As the steering wheel 41 is turned, the pseudo paddle shifter 51 is also rotated with the steering wheel 41 and the position of the pseudo paddle shifter 51 is changed.

FIG. 7 illustrates rotation of the steering wheel 41. When the steering wheel 41 is turned and the rotation angle of the steering wheel 41 becomes as large as approximately 180° as shown at the bottom of the figure, the positions of the right and left paddles of the pseudo paddle shifter 51 are reversed. In this state, the left paddle as viewed from the driver corresponds to upshifting, and the right paddle as viewed from the driver corresponds to downshifting. This may cause confusion to the driver as to which paddle corresponds to downshifting, hindering the driver from operating the pseudo paddle shifter 51. When the rotation angle becomes large, the driver may change his or her grip on the steering wheel 41. This tends to cause more confusion. Changing the grip on the steering wheel 41 may further hinder the driver from operating the pseudo paddle shifter 51.

As described above, even if the driver attempts to downshift after entering the curved road, the driver may not be able to perform an operation as desired because the position of the pseudo paddle shifter 51 has been changed. In such a situation, it is possible to continue driving without downshifting. However, downshifting before exiting the curved road will allow smoother acceleration after the curved road. Therefore, the battery electric vehicle 100 according to the present embodiment automatically shifts down the virtual shift position according to the virtual engine speed when the steering angle of the steering 24 becomes large and the virtual engine speed becomes equal to or less than a predetermined speed during traveling in the manual mode. The steering angle of the steering 24 can also be expressed as the rotation angle of the steering wheel 41.

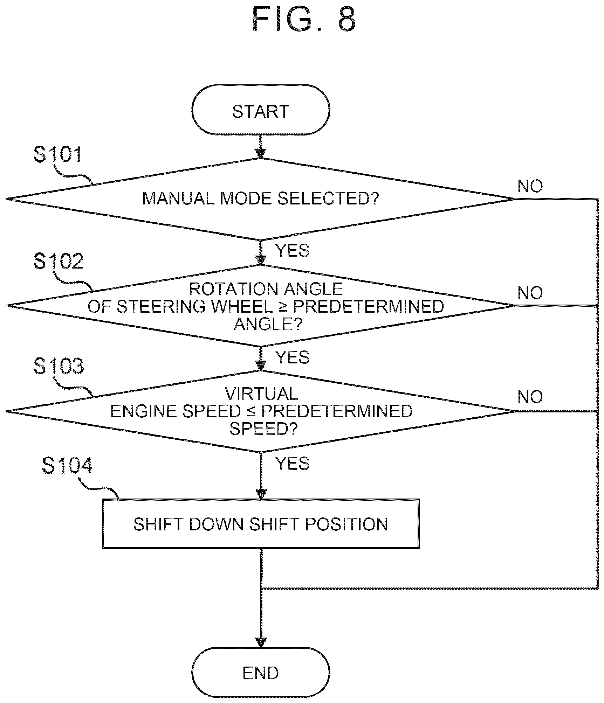

FIG. 8 is a flowchart showing an example of a process that is performed by the battery electric vehicle 100. The process shown in the flowchart of FIG. 8 is implemented by the processor 102 executing one or more driving control programs 104 stored in the memory 103.

According to the flow shown in FIG. 8, it is first determined in step S101 whether the manual mode is selected as the control mode. When the manual mode is not selected, the flow ends.

When the manual mode is selected as the control mode, step S102 is performed. In step S102, it is determined whether the rotation angle of the steering wheel 41 is equal to or greater than a predetermined angle. In this example, the predetermined angle is set in advance. When the rotation angle of the steering wheel 41 is less than the predetermined angle, the flow ends.

When the rotation angle of the steering wheel 41 is equal to or greater than the predetermined angle, step S103 is performed. In step S103, it is determined whether the virtual engine speed is equal to or less than a predetermined speed. In step S103, the processor 102 may determine that the virtual engine speed is equal to or less than the predetermined speed when the state in which the virtual engine speed is equal to or less than the predetermined speed continues for a certain period of time or more, and may determine that the virtual engine speed is higher than the predetermined speed when the state in which the virtual engine speed is equal to or less than the predetermined speed ends before the certain period of time or more elapses. When the virtual engine speed is higher than the predetermined speed, the flow ends.

When the virtual engine speed is equal to or less than the predetermined speed, step S104 is performed. In step S104, the virtual shift position is shifted from a current shift position to a shift position that is one gear lower than the current shift position.

### 6-2. Effects

According to the above process, when the virtual engine speed drops with the steering 24 turned to a large extent during traveling of the battery electric vehicle 100, an automatic downshift is performed according to the virtual engine speed. The state in which the steering 24 is turned to a large extent occurs when the battery electric vehicle 100 travels around a curve or a corner. In this state, it is difficult for the driver to grasp the position of the paddle that corresponds to downshifting. However, since a downshift is automatically performed according to the virtual engine speed, this allows smooth acceleration after the curve or the corner. Driver convenience can thus be improved.

A downshift is not necessarily required when the driver does not intend to accelerate the battery electric vehicle 100 again, such as when the driver stops the battery electric vehicle 100 on a curved road. However, even in such a case, a downshift will not adversely affect traveling of the battery electric vehicle 100, and therefore the above process will not disturb the driver.

### 6-3. Predetermined Angle

The predetermined angle that serves as a reference for the determination in step S102 is set to an angle close to 180°. When the rotation angle of the steering wheel 41 becomes close to 180°, the positions of the right and left paddles of the pseudo paddle shifters 51 are reversed. This makes it difficult for the driver to grasp the positions of the paddles. For example, the predetermined angle may be set to 150°, or may be set to 120°. Alternatively, the determination in step S102 may be made based on the rotation angle of 90° at which the positions of the right and left paddles are reversed with respect to the vertical line passing through the center of the steering wheel 41. That is, the condition of step S102 may be considered to be satisfied when the rotation angle of the steering wheel 41 becomes equal to or greater than 90°.

### 7. Second Embodiment: Pseudo Paddle Shifter Installed on Steering Column

A second embodiment is an embodiment in a case where the pseudo sequential shifter 25 is the pseudo paddle shifter 52 installed on the steering column 42. As in the first embodiment, a situation will be considered in which the driver reduces the amount of depression of the accelerator pedal 22 and the virtual engine speed decreases accordingly while the battery electric vehicle 100 is traveling on a curved road. In the second embodiment as well, the driver may not be able to downshift smoothly in a situation where he or she wants to downshift.

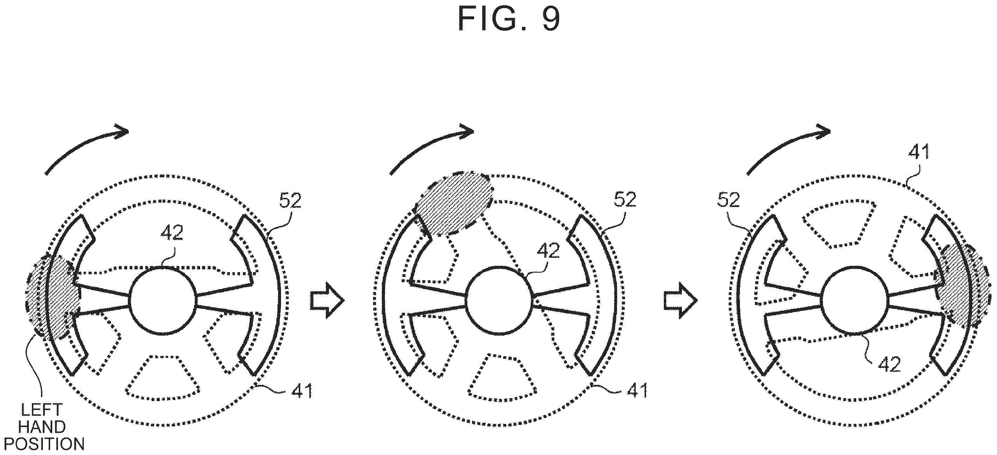

FIG. 9 shows rotation of the steering wheel 41. The gray areas surrounded by a long dashed short dashed line are the positions where the left hand is placed when the steering wheel 41 is in the initial position. Since the pseudo paddle shifter 52 is fixed to the steering column 42, the position of the pseudo paddle shifter 52 itself does not change. However, the positional relationship between the pseudo paddle shifter 52 and the hand position changes as the steering wheel 41 is rotated. This hinders the driver from operating the pseudo paddle shifter 52. For example, when the rotation angle of the steering wheel 41 is close to 90°, the left hand position is located away from the position of the left paddle of the pseudo paddle shifter 52, which hinders the driver from performing a downshift operation. As the rotation angle further increases, the left hand position and the position of the left paddle of the pseudo paddle shifter 52 become further apart from each other. When the rotation angle becomes large, the driver may change his or her grip on the steering wheel 41. Even if the driver changes his or her grip on the steering wheel 41, the positional relationship between the hand position and the pseudo paddle shifters 52 has changed from when the steering wheel 41 is in the initial position, which may hinder the driver from operating the pseudo paddle shifters 52. Therefore, in the second embodiment as well, the battery electric vehicle 100 automatically shifts down the virtual shift position according to the virtual engine speed when the manual mode is selected and the steering angle of the steering 24 becomes larger than the predetermined angle during traveling in the manual mode.

As in the first embodiment, a process that is performed by the battery electric vehicle 100 can be represented by the flowchart of FIG. 8. Steps S101 to S104 are the same as those in the first embodiment. However, the predetermined angle used for the determination in step S102 is set to an angle smaller than that in the first embodiment for the following reason. In the second embodiment, before the rotation angle of the steering wheel 41 reaches 90°, the left hand position is away from the position of the left paddle of the pseudo paddle shifter 52, hindering the driver from performing a downshift operation. The predetermined angle may be, for example, 80°.

Since the battery electric vehicle 100 performs such a process, an automatic downshift is performed according to the virtual engine speed even in a situation where the steering angle of the steering 24 becomes large and it becomes difficult for the driver to operate the pseudo paddle shifter 52. The state in which the steering angle of the steering 24 becomes large occurs when the battery electric vehicle 100 is traveling around a curve, a corner, etc. However, this automatic downshift allows smooth acceleration after the curve or the corner. Driver convenience can thus be improved.

### 8. Timing to Downshift

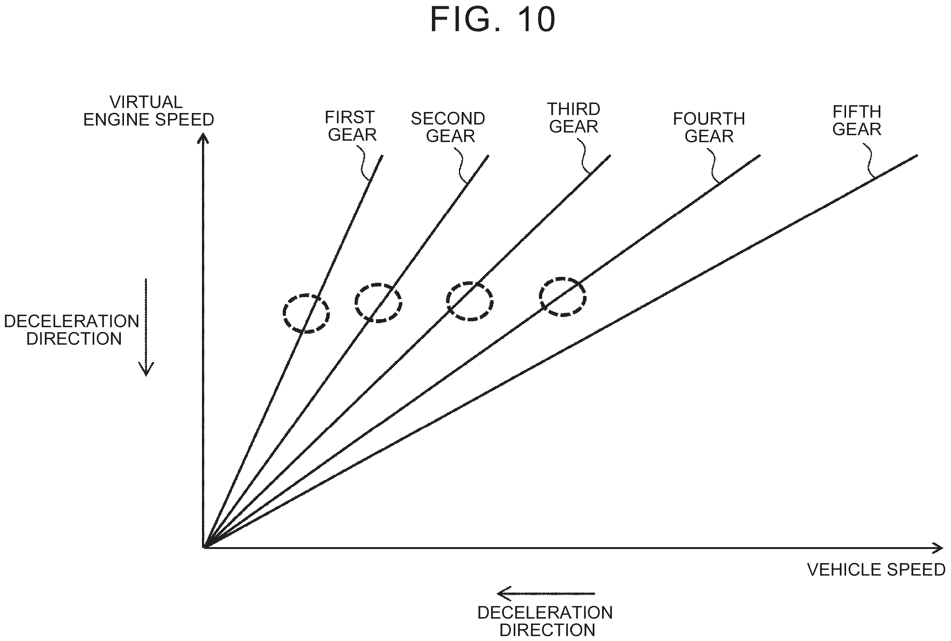

Automatic downshifting according to the virtual engine speed by the battery electric vehicle 100 has been described above. The timing to perform an automatic downshift can also be said to be determined according to the vehicle speed. FIG. 10 shows the relationship between the vehicle speed of the battery electric vehicle 100 and the virtual engine speed. Dotted circles indicate the timings to shift the virtual shift position when an automatic downshift is performed. In FIG. 10, the number of virtual shift positions is five, namely first gear to fifth gear. However, this number of shift positions is merely illustrative. As shown in FIG. 10, when the pseudo sequential shifter 25 is not operated and the clutch operation amount is constant, the vehicle speed and the virtual engine speed at a certain shift position have a one-to-one correspondence. Therefore, the timing to downshift that is determined by the virtual engine speed can also be said to be determined by the vehicle speed according to the shift position.

### 9. Notification to Driver

The driver may be notified via the HMI 20 that an automatic downshift has been performed by the battery electric vehicle 100. For example, a current shift position may be displayed on the display of the HMI 20 so that the driver will know that the shift position has been changed by looking at the display.

Alternatively, the driver may not be explicitly notified that an automatic downshift has been performed. When the virtual shift position is shifted by a downshift, the virtual engine torque increases, so that the volume of the engine sound increases discontinuously. Therefore, the driver will be aware of the automatic downshift even without any notification via display etc.

## Claims

1. A battery electric vehicle (100) that includes an electric motor (4F, 4R) as a driving source, the battery electric vehicle (100) comprising:
an accelerator pedal (22) that is used to drive the battery electric vehicle (100);
a pseudo sequential shifter (25) installed on a steering (24) and simulating a sequential shifter that is used to perform a shifting operation of a manual transmission internal combustion engine vehicle; and
a processor (102) that controls the battery electric vehicle (100) according to an operation of the accelerator pedal (22), wherein the processor (102) is configured to
execute, according to selection by a driver, a control mode in which an operation of the pseudo sequential shifter (25) is associated with a virtual shift position that is a virtually implemented shift position, and an operation amount of the accelerator pedal (22), the virtual shift position, and a vehicle speed of the battery electric vehicle (100) are associated with torque of the electric motor (4F, 4R), and
automatically shift down the virtual shift position according to the vehicle speed when a steering angle of a steering wheel (41) becomes equal to or greater than a predetermined angle during execution of the control mode.

2. The battery electric vehicle (100) according to claim 1, wherein the pseudo sequential shifter (25) is installed on the steering wheel (41).

3. The battery electric vehicle (100) according to claim 1, wherein the pseudo sequential shifter (25) is mounted on a steering column (42).

4. The battery electric vehicle (100) according to claim 2, wherein the pseudo sequential shifter (25) is a button installed on the steering wheel (41).

5. The battery electric vehicle (100) according to claim 2 or 3, wherein the pseudo sequential shifter (25) is a pseudo paddle shifter (51, 52) that simulates a paddle shifter.

6. The battery electric vehicle (100) according to claim 5, wherein the pseudo paddle shifter (51, 52) is a pair of paddles installed on right and left sides of the steering (24).

7. The battery electric vehicle (100) according to any one of claims 1 to 4, wherein when the vehicle speed decreases and falls below a vehicle speed set for each of the virtual shift positions, the virtual shift position is automatically shifted down according to the vehicle speed.

8. The battery electric vehicle (100) according to any one of claims 1 to 4, further comprising a speaker (21) that outputs a pseudo engine sound to inside of the battery electric vehicle, the pseudo engine sound being an engine sound that replicates an engine sound of the manual transmission internal combustion engine vehicle, wherein the processor (102) is further configured to, during the execution of the control mode,
play the pseudo engine sound from the speaker (21), and
associate the operation amount of the accelerator pedal (22), the virtual shift position, and the vehicle speed with a volume of the pseudo engine sound.

9. The battery electric vehicle (100) according to any one of claims 1 to 4, wherein automatically shifting down the virtual shift position according to the vehicle speed includes shifting the virtual shift position from a current shift position to a shift position that is one gear lower than the current shift position according to the vehicle speed.

10. A non-transitory storage medium storing instructions that are executable by one or more processors (102) of a battery electric vehicle (100) and that cause the one or more processors (102) to perform functions, the battery electric vehicle (100) including an electric motor (4F, 4R) as a driving source and including: an accelerator pedal (22) that is used to drive the battery electric vehicle (100); a pseudo sequential shifter (25) installed on a steering (24) and simulating a sequential shifter that is used to perform a shifting operation of a manual transmission internal combustion engine vehicle; and the one or more processors (102) that control the battery electric vehicle (100) according to an operation of the accelerator pedal (22), the functions comprising:
executing, according to selection by a driver, a control mode in which an operation of the pseudo sequential shifter (25) is associated with a virtual shift position that is a virtually implemented shift position, and an operation amount of the accelerator pedal (22), the virtual shift position, and a vehicle speed of the battery electric vehicle (100) are associated with torque of the electric motor (4F, 4R); and
automatically shifting down the virtual shift position according to the vehicle speed when a steering angle of a steering wheel (41) becomes equal to or greater than a predetermined angle during execution of the control mode.
